# EUROPÄISCHE PATENTANMELDUNG

(11) **EP 2 281 748 A1**
(43) Veröffentlichungstag der Anmeldung: **09.02.2011**
(21) Anmeldenummer: 09009976.3
(22) Anmeldetag: 03.08.2009
(51) Int. Cl.: B64F 5/00, H05B 3/36

(54) **Vorrichtung zur Enteisung von Flugzeugen**

(71) Anmelder: König, Olga, 35041 Marburg (DE)
(72) Erfinder: König, Olga, 35041 Marburg (DE)
(74) Vertreter: Jeck, Anton

(57) **Zusammenfassung**

Die Erfindung betrifft eine Vorrichtung zur Enteisung von Flugzeugen mit mehreren, an einer Stromquelle (4) angeschlossenen, elektrischen Heizelementen (2) mit einem Steuerungssystem. Sie ist gekennzeichnet durch flexible Heizelemente, welche in flexible Thermomatten (1) als Heizelemente, die mit abzutauenden Flächen eines zu enteisenden Flugzeugs, in Kontakt bringbar sind.

## Beschreibung

Die Erfindung betrifft eine Vorrichtung nach dem Oberbegriff des Anspruchs 1 zur Anwendung am Boden bestehend aus mehreren, an einer Gleich- oder Wechselstromquelle angeschlossenen, elektrischen Heizelementen mit einem Steuerungssystem.

Die hier beschriebene Erfindung ist in den Bereich der Luftfahrttechnik einzugliedern und stellt ein neuartiges Enteisungssystem für das Enteisen von Luftfahrzeugen (LF) am Boden dar. Eingesetzt werden kann das System auf allen Gebieten des Energiemaschinenbaus.

Die Vereisungen eines Luftfahrzeuges am Boden unterscheiden sich grundsätzlich von dem Vereisungsprozess während des Fluges. Befindet sich das Luftfahrzeug in der Luft, vereist vorwiegend der Bug. Am Boden jedoch vereisen nahezu alle Flächen des Luftfahrzeuges: Bug, Flügel, Leitwerk und der Rumpf. Gefährlich ist insbesondere die Vereisung der Flügel und des Leitwerkes. Es kann bereits bei geringen Anstellwinkeln des Leitwerkes zu Strömungsabrissen kommen. Das vereiste Flugzeug ist beim Starten und im Steigflug instabil und bei der Steuerung treten Störungen auf. Weiterhin verändert das Luftfahrzeug seine Flugcharaktetistik. Ein Absturz kann die Folge sein. (Trunow O. K., Flugsicherheit bei Vereisungsbedingungen, Moskau, GNIIGAR, 1995, S. 17).

Zum Enteisen von Flugzeugen vor dem Start am Boden werden weltweit dazu geeignete Enteisungsflüssigkeiten verwendet. Sie entfernen Schnee, Eis sowie Raureif und verzögern die Neubildung. Die wesentlichen Anforderungen an Enteisungsmittel für Flugzeuge sind nachstehend aufgeführt:
- Hohe Effizienz beim Entfernen von Reif, feste (kristalline) Vereisung und Packeis.
- Die Eigenschaft das Vereisen der Oberflächen der Luftfahrzeuge bei entsprechenden Wetterbedingungen (Schneeschauer, Eisregen...) zu verzögern (Typ I) bzw. für einen definierten Zeitraum gänzlich zu vermeiden (Typ II).
- Die Enteisungsflüssigkeit muss beim Starten (bei einer Geschwindigkeit größer 160 km/h) von der Flugzeugoberfläche rückstandslos abfließen.
- Auch bei niedrigen Außenlufttemperaturen darf die Enteisungsflüssigkeit, zum Minimieren des Energieaufwandes der Besprühungsanlage, nicht zähflüssig werden.
- Die Enteisungsflüssigkeit muss ungiftig sein.
- Von der Enteisungsflüssigkeit darf keine nachhaltige Schädigung der Umwelt ausgehen.

Die Enteisungsflüssigkeiten vom Typ I (meist Newtonsche Flüssigkeiten) stellen keinen längeren Schutz vor einer Wiedervereisung dar. Sie werden unmittelbar vor dem Start eingesetzt. Die Enteisungsflüssigkeiten vom Typ II verhindern dagegen für einen bestimmten Zeitraum das Wiedervereisen. Sie sind stark verdickte Lösungen mit toxotropischen Eigenschaften. Auch sie stellen meist eine Newtonsche Flüssigkeit dar.

Neben den Enteisungsflüssigkeiten kommen auch elektrische Enteisungsanlagen, zum Einsatz. Am verbreitesten sind Systeme mit zyklischen Aufheizphasen (Komissarow G. W., Enteisungssysteme der Luftfahrzeuge, Moskau, 1967).

Im Folgenden sind die wichtigsten bekannten elektrischen Enteisungsanlagen bzw. elektrothermische Heizeinrichtungen sowie elektrisch beheizbare Gegenstände aufgeführt:
a) Durch US 2627012 sind elektrothermische Heizeinrichtungen bekannt, die in aerodynamische Oberflächen von Luftfahrzeugen integriert sind (Patentschrift US Nº 2627012 Informationsverlagszentrum Wissenschaft, Kultur, Kunst (IVZ WKK) 244-134, 1958). Die elektrothermischen Heizeinrichtungen sind an vereisungsgefährdeten Stellen der Flugzeugstruktur angeordnet und können während des Flugs betrieben werden.
b) Durch SU 335159 ist eine elektrothermische Enteisungsanlage bekannt, bestehend aus Heizelementen in Form einer dünnen Beschichtung von Flugzeugoberflächen mit einem elektrisch leitfähigen Material (AC SU Nº 335159 IPK B64D15/12, 09.01.69).
c) Durch RU 234781 ist eine Enteisungsanlage bekannt, im Wesentlichen bestehend aus einer vom zu enteisenden Objekt elektrisch isolierten Elektrode und einer Gleichstromquelle. Dabei muss die Oberfläche des zu enteisenden Objektes entweder ein ferroelektrisches, ein ferromagnetisches oder ein halbleitendes Material sein. Durch elektromagnetische Effekte entsteht Wärme (Patentschrift RU Nº 2234781, IPK H02G07/16. H05B06100, B64D15/00, vom 30.11.1999).
d) Durch RU 2182406 ist ein elektrothermischer Stoff bzw. ein elektrothermisches Gewebe bekannt, der aus einer Reihe elektrisch isolierender Fäden und mindestens zwei leitenden Schienen hergestellt ist. An die beiden Schienen sind elektrisch leitfähige Fäden angeschlossen. Die isolierenden und leitenden Fäden sind miteinander verwoben, um eine gleichmäßige Wärmeverteilung sicherzustellen (Patentschrift RU Nº 2182406, IPK H05B03/36 vom 10.05.2002).
e) Zum Schutz elektronischer Ausrüstungsgegenstände, insbesondere von Globalstar Satellitentelefonen, vor widrigen Umgebungstemperaturen ist durch RU 2246188 eine Wärmeschutztasche aus einer Sandwichstruktur bekannt. Ein Heizelement der Wärmeschutztasche besteht aus einem flexiblen elektrisch beheizbaren Gewebe mit beidseitig angeordneten elektrischen Abschirmungen. Die Wärmeschutztasche nimmt den gesamten zu schützenden Gegenstand auf (Patentschrift RU Nº 2246188 IPK H05K07/20, vom 28.12.2001). Eine elektrothermische Enteisungsanlage, die nach dem Prinzip einer solchen Wärmeschutztasche aufgebaut wäre, würde die gesamten Tragflächen umhüllen bzw. aufnehmen.

Bei der Verwendung von Enteisungsflüssigkeiten zum Enteisen insbesondere der Flügel und der Leitwerke von Luftfahrzeugen findet zwangsweise eine Störung des ökologischen Systems statt. Die Flüssigkeiten werden in großen Mengen in die Umwelt eingetragen.

Die Wiederverwendung der Enteisungsflüssigkeiten ist nicht möglich, sie zerstäuben beim Abfließen von den Flugzeugflügeln. Ein kontinuierliches Nachkaufen der Flüssigkeit in großen Mengen ist erforderlich. Dies bedingt einen hohen logistischen Aufwand der entsprechend finanziert werden muss.

Die beschriebenen elektrischen Enteisungssysteme für Luftfahrzeuge bzw. elektrothermische Heizeinrichtungen sowie elektrisch beheizbare Gegenstände verbrauchen viel Energie (a, e), erfordern zusätzlich aufzubringende Metallbeschichtungen (b), oder können nur bei Vorhandensein bestimmter Materialien verwendet werden (b, c). Sie sind nicht selbstregulierend (a bis e) oder umschließen den gesamten Flügel und verhindern damit einen ungestörten Ablauf des Tauwassers (e). Auch sind sie nicht ohne weiteres für alle Flugzeuggrößen geeignet (e). Außerdem ist eine vollständige Umhüllung des Flugzeugflügels (e) nicht erforderlich. Auf der Unterseite bleibt Schnee nicht liegen und Eis entsteht ebenfalls nicht.

Zusammengefasst ist die Verwendung von Enteisungsflüssigkeiten aufwändig und stört das ökologische System. Bestehende elektrische Enteisungssysteme für Luftfahrzeuge sind ineffizient und/oder erfordern hohe technische Anforderungen an die zu enteisenden Objekte.

Es ist Aufgabe der Erfindung eine Vorrichtung zur Enteisung von Flugzeugen zur Anwendung am Boden zu schaffen, die keine Enteisungsflüssigkeit erfordert und am Boden eingesetzt werden kann, um das Flugzeug zumindest an allen vereisungsgefährdeten Flächen zu enteisen.

Die gestellte Aufgabe wird gelöst mit den Merkmalen des Anspruchs 1.

Die neue Flugzeugenteisungsanlage (FEA) zur Anwendung am Boden besteht aus mehreren, an eine Gleich- oder Wechselstromquelle, angeschlossenen, flexiblen Thermomatten mit einem Steuerungssystem. Die Heizelemente der Thermomatten sind flexibel.

Die erfindungsgemäße Flugzeugenteisungsanlage spart gegenüber den herkömmlichen Systemen mind. 50 % der Kosten und ist einfach in der Handhabung. Die Möglichkeit einer Serienanfertigung bedingt durch den unkomplizierten Systemaufbau der Thermomatten und der optimalen Materialauswahl bringt einen deutlichen Kostenvorteil gegenüber den bisher bekannten elektrischen Enteisungsanlagen.

Die flexiblen Thermomatten setzen sich aus einer beidseitig wasserabweisenden Stoff, einseitigen Wärmedämmung und flexiblen Heizelementen zusammen. Die flexiblen Heizelemente der Thermomatten wiederum bestehen aus nicht elektrisch leitenden Fäden, die mit Fäden mit elektrischem Widerstand umflochten sind. Die so entstehende Stoffstruktur weißt eine hohe Festigkeit auf und ist beidseitig elektrisch isoliert. Im Betrieb übertragen die Heizelemente die Wärme in Form von Wärmestrahlung und Wärmeleitung mit einer hohen Energiedichte an die Oberfläche des abzutauenden Objekts. Die Stromversorgung wird über ein Kabel bzw. über eine Stromleitung sichergestellt.

Das Steuerungssystem regelt mit Hilfe von Temperaturfühlern an der Unterseite (Temperatur der Abtaufläche) und im Inneren der Matten (Heiztemperatur) sowie einem Umgebungslufttemperatursensor eigenständig die Abtauleistung und sorgt für eine energieeffiziente (energieminimierte) Abtauung der mit Eis und Schnee überzogenen Flügel und Leitwerke. Nach dem Abtauprozess bilden die Thermomatten für eine beliebige Zeitspanne bei Schneeschauer oder Eisregen einen zuverlässigen Schutz vor dem Wiedervereisen. Die einzelnen Thermomatten werden unabhängig voneinander leistungsgeregelt. Jede Thermomatte wird also nur so stark beheizt, wie es eine darunterliegende Eisschicht erfordert. Durch diese Vorgehensweise werden 10 bis 15 Prozent Energie eingespart.

Die Thermomatten bilden eine Palette aus sieben unterschiedlichen Größen (und Leistung). Für jeden Flugzeugtyp kann ein speziell computeroptimiertes Set zusammengestellt werden. Dieses Set kann auf rollbaren Transportwagen verstaut und schnell und unkompliziert zu den Flugzeugen befördert werden. Befestigt werden können die Thermomatten an der Oberfläche der Flugzeugflügel und der Leitwerke mit Befestigungsmitteln, wie etwa Bändern in Kombination mit Schnellverschlussklemmen (z. B. dem standardisierten Fast-Typ).

Die neue Flugzeugenteisungsanlage zeichnet sich durch eine höhere Effizienz der Flugzeugenteisung aus. Die Handhabung ist einfach und energieoptimiert. Fehler werden vermieden, indem an einem Monitor des Steuerungssystems die jeweiligen Arbeitsschritte angezeigt werden. Sind alle Thermomatten angeschlossen, wird der Abtauprozess vollautomatisch durchgeführt.

Die Möglichkeit einer Serienanfertigung, bedingt durch den unkompfizierten Systemaufbau der Thermomatten und der optimalen Materialauswahl, bringt einen deutlichen Kostenvorteil gegenüber den bisher bekannten elektrischen Enteisungsanlagen. Bei der Anwendung der neuen Flugzeugenteisungsanlage entstehen keine umweltschädlichen Rückstände, wie bei der Verwendung von Enteisungsflüssigkeiten.

Die neue Flugzeugenteisungsanlage kann weltweit an jedem Flugzeug eingesetzt werden. An das Flugzeug bzw. an die Flugzeughülle werden keine besonderen Ansprüche gestellt.

Ein Ausführungsbeispiel der Erfindung wird anhand der Zeichnungen näher erläutert. Es zeigen:

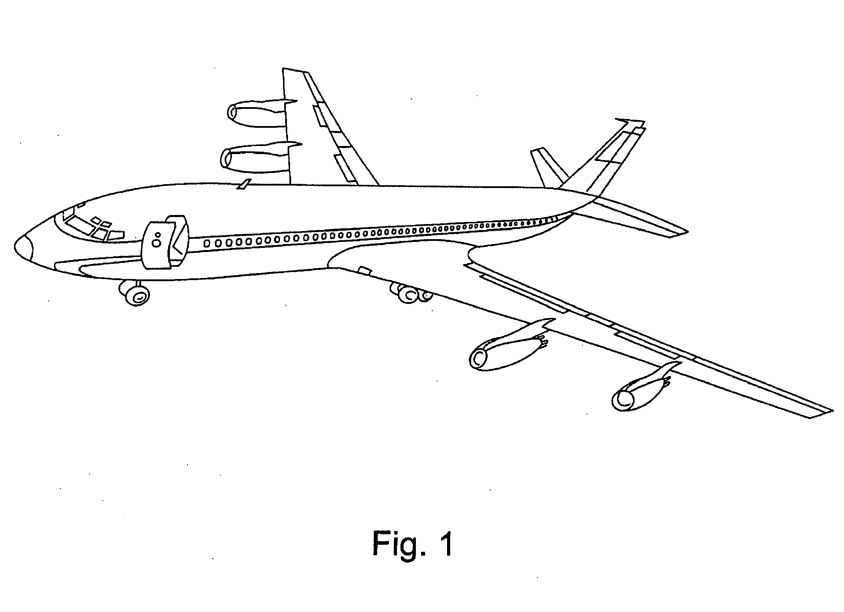

- Fig. 1: ein Passagierflugzeug,
- Fig. 2: einen optimalen Belegungsplan am Beispiel eines Passagierflugzeuges,

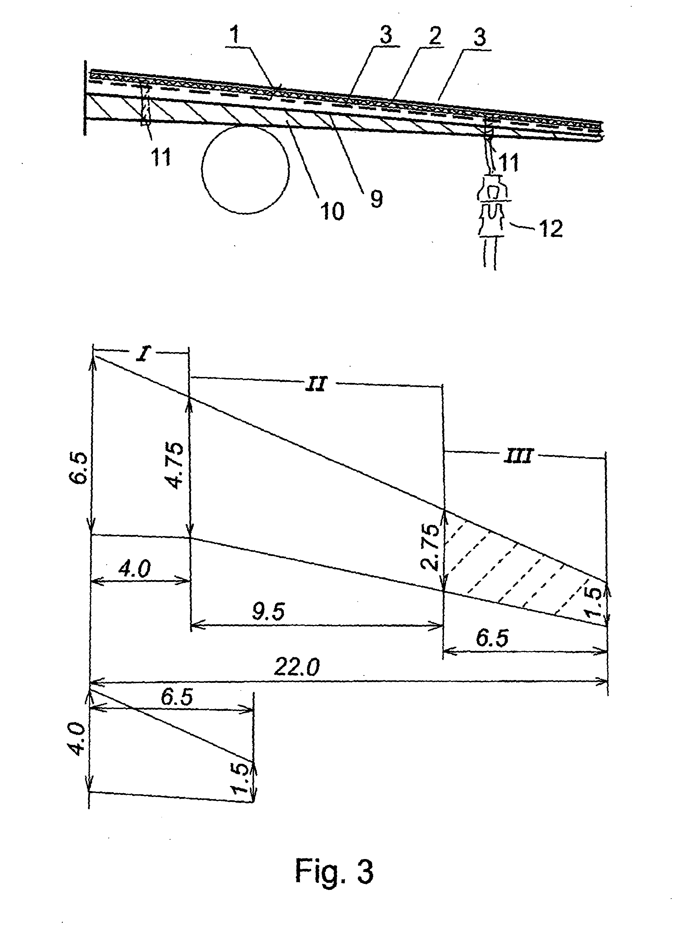

- Fig. 3: eine Thermomatte und die Flächenbestimmung für den Belegungs- plan und
- Fig. 4: ein Block-Schaltbild der Automatisierungssteuerung.

In den Figuren dargestellt sind:
Eine Flugzeugenteisungsanlage zur Anwendung am Boden, die aus mehreren, flexiblen Thermomatten 1 besteht. Die Thermomatten 1 sind an einer Gleich - oder Wechselstromquelle 4, mit monitorüberwachtem Steuerungssystem 21 angeschlossen. Eine Thermomatte 1 weist ein flexibles Heizelement 2 aus einem flexiblen elektrothermischen Stoff 2 bzw. aus einem flexiblen elektrothermischen Gewebe 2, einen elektrischen Isolator 3, sowie eine wasserabweisende Wärmedämmung 5 auf. Es können Leistungssektionen 7 des flexiblen Heizelementes 2 vorgesehen sein, die Heizzonen 8 der Thermomatte 1 bilden. Die Thermomatten 1 können mittels Befestigungsmitteln, beispielsweise mittels Bandbefestigungen 11 bzw. Befestigungen entsprechend dem Fast-Typ 12, an beispielsweise horizontalen Oberflächen des Flugzeugs 9 und/oder am Leitwerk 10 des Flugzeugs 9 befestigt werden. Um ein Abtauen der zu enteisenden Flächen unter eigenständiger Regelung einer Abtauleistung der Thermomatten 01 zu ermöglichen, kann die Flugzeugenteisungsanlage einen Elektroanalyse- und Kontrollblock 13, einen Indikationsblock 14, einen Steuerungsblock 15, einen Kommutationsblock 16, einen Temperatursensor zum Feststellen der Heiztemperatur, einen Temperatursensor 18 zum Feststellen der Temperatur der Abtaufläche, sowie einen Außenlufttemperatursensor 19 umfassen. Stromleitungen 20 dienen der Verbindung mit der Gleich - oder Wechselstromquelle 4. Die Flugzeugenteisungsanlage kann einen im Zentrum für Flugsteuerung angeordneten Bildschirm der Flugbereitschaft 22 aufweisen.

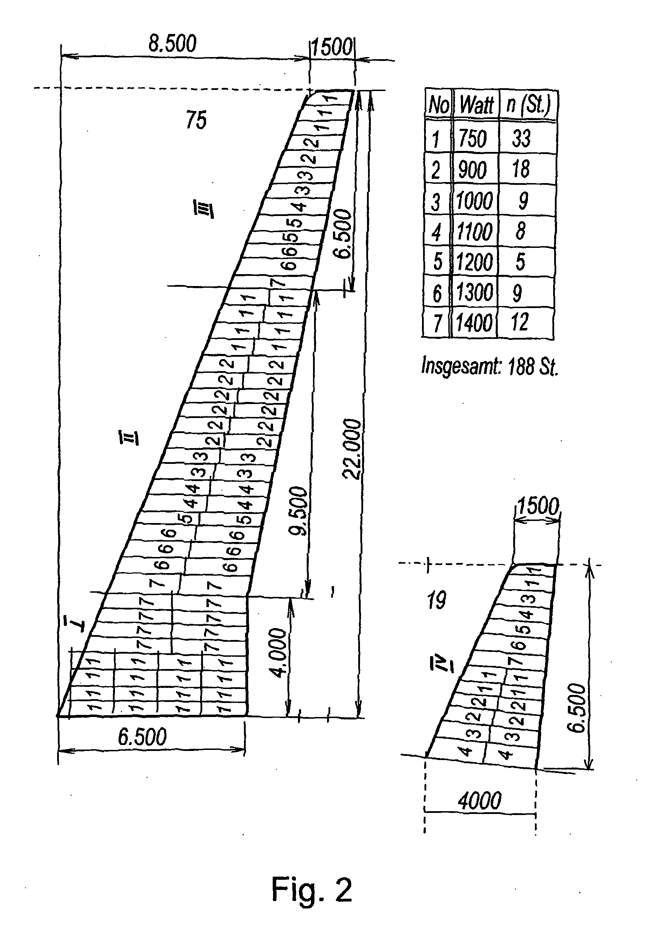

Wie anhand der Fig. 2 gezeigt ist, können mit sieben unterschiedlichen Thermomatten 1 die Oberflächen der Flügel und die Seitenflächen des Leitwerks eines Luftfahrzeugs belegt werden.

Die Thermomatten haben verschieden große Abmessungen und Heizelemente mit verschiedenen Heizleistungen, wie der Tabelle in Fig. 2 zu entnehmen ist. Dabei steigt die Heizleistung von 750 W über 500 W, 1000 W, 1100 W, 1200 W und 1300 W auf 1400 W an.

Wie der Belegungsplan für die Oberfläche eines Flügels zeigt, werden dafür 75 Thermomatten benötigt, die sich zusammen mit den neunzehn Thermoelementen für eine Seitenfläche des Leitwerks zu vierundneunzig Thermoelementen ergänzen. Da beide Flügel und beide Seiten des Leitwerks mit Thermomatten belegt werden, erhöht sich die Anzahl der benötigten Thermomatten auf einhundertachtundachtzig Stück, die sich wie folgt zusammensetzen:

| | |
|---|---|
| 28 X 33 Thermomatte Nr. 1 mit 750 W | = 66 Thermomatten |
| 22 x 18 Thermomatte Nr. 2 mit 900 W | = 36 Thermomatten |
| 2 x 9 Thermomatte Nr. 3 mit 1000 W | = 18 Thermomatten |
| 2 x 8 Thermomatte Nr. 4 mit 1100 W | = 16 Thermomatten |
| 2 x 5 Thermomatte Nr. 5 mit 1200 W | = 10 Thermomatten |
| 2 x 9 Thermomatte Nr. 6 mit 1300 W | = 18 Thermomatten |
| 2 x 17 Thermomatte Nr. 7 mit 1400 W | = 24 Thermomatten |
| | = 188 Thermomatten |

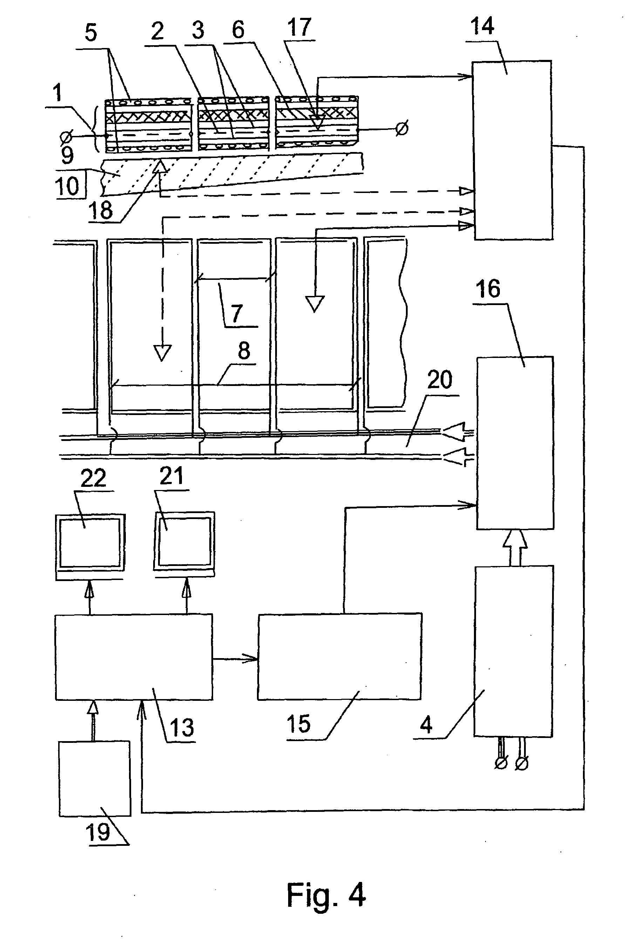

Aus der Fig. 2 sind auch die Maße der Thermomatten Nr. 1 bis Nr. 7 aus den Abmessungen der Flügeloberfläche und der Seitenfläche des Leitwerks zu entnehmen, die dann in den Bereichen I, II, III für die Oberfläche eines Flügels und des Leitwerks ableitbar sind. Schließlich zeigt die Fig. 4 ein Blockschaltbild der Automatisierungssteuerung. Daraus ist zu ersehen, dass ein Indikationsblock 14 über einen Temperatursensor 17 die Temperatur der Heizelemente 2 überwacht und über einen Temperatursensor 18 die Temperatur der Abtaufläche anzeigt. Der Indikationsblock 14 steuert einen Kontrollblock 13 an, dem über einen Außentemperatursensor 19 die Außentemperatur als Wert zuführbar ist. Der Kontrollblock 13 ist mit dem Steuerungsblock 15 verbunden, der den Kommunikationsblock 16 steuert. Zudem steht der Kontrollblock 13 mit einem monitorgesteuerten Steuerungssystem 21 und dem Bildschirm einer Flugbereitschaft 22 in Verbindung. Auf diese Weise ist die Flugzeugenteisungsanlage voll automatisiert und kontrollierbar steuerbar.

## Patentansprüche

1. Vorrichtung zur Enteisung von Flugzeugen mit mehreren, an einer Gleich - oder Wechselstromquelle (4) angeschlossenen, elektrischen Heizelementen (2) mit einem Steuerungssystem (21)
**gekennzeichnet durch**
flexible Heizelemente, welche in flexible Thermomatten (1) als Heizelemente (2), die mit abzutauenden Flächen eines zu enteisenden Flugzeugs (9), in Kontakt bringbar sind.

2. Vorrichtung nach Anspruch 1,
**dadurch gekennzeichnet,**
**dass** die flexiblen Thermomatten (1) einzeln leistungsgeregelt sind.

3. Vorrichtung nach Anspruch 1 und 2,
**dadurch gekennzeichnet,**
**dass** die flexiblen Thermomatten (1) aus einer beidseitig wasserabweisenden Stoff, einseitigen Wärmedämmung (5) und flexiblen Heizelementen (2) zusammengesetzt sind.

4. Vorrichtung nach einem der Ansprüche 1 bis 3,
**gekennzeichnet durch**
einen die Außenluft- bzw. Umgebungstemperatur messenden Temperatur-sensor (19).

5. Vorrichtung nach einem der Ansprüche 1 bis 4,
**gekennzeichnet durch**
einen die Heiztemperatur messenden Temperatursensor (17).

6. Vorrichtung nach einem der Ansprüche 1 bis 5,
**gekennzeichnet durch**
einen die Temperatur der Abtaufläche messenden Temperatursensor (18).

7. Vorrichtung nach einem der vorhergehenden Ansprüche,
**dadurch gekennzeichnet,**
**dass** das Steuerungssystem (21) mit einem Monitor (21) überwacht ist.

8. Vorrichtung nach einem der vorhergehenden Ansprüche,
**gekennzeichnet durch**
Mittel zur direkten Kommunikation mit einer Flugbereitschaft (22).

9. Vorrichtung nach einem der vorhergehenden Ansprüche,
**dadurch gekennzeichnet,**
**dass** die Heizelemente (2) der flexiblen Thermomatten (1) aus elektrisch nicht leitenden Fäden bestehen, die mit Fäden mit elektrischem Widerstand umflochten sind.

10. Vorrichtung nach einem der vorhergehenden Ansprüche,
**gekennzeichnet durch**
Befestigungsmittel, mit denen die flexiblen Thermomatten (1) zumindest an horizontalen Oberflächen des Flugzeugs (9) und des Leitwerks (10) befestigbar sind.

11. Vorrichtung nach einem der vorhergehenden Ansprüche,
**gekennzeichnet durch**
einen Kontrollblock (13) und einen mit diesem verbundenen Außentemperatursensor (19) zur Überwachung der Außentemperatur;
einen Indikationsblock (14), der mit einem Temperatursensor (17), der die Temperatur der Heizelemente (2) überwacht, sowie mit einem Temperatursensor (18), der die Temperatur der Abtaufläche überwacht, verbunden ist, und den Kontrollblock (13) ansteuert;
wobei der Kontrollblock (13) mit einem Steuerungsblock (15) verbunden ist, der einen Kommunikationsblock (16) steuert; und
der Kontrollblock (13) mit einem monitorüberwachten Steuerungssystem (21) und einem Bildschirm einer Flugbereitschaft (22) verbunden ist.

12. Vorrichtung nach einem der vorhergehenden Ansprüche,
**dadurch gekennzeichnet,**
**dass** die Stromquelle eine Gleich -oder Wechselstromquelle ist.

13. Verfahren zur Enteisung eines Flugzeugs am Boden mit einer Flugzeugenteisungsanlage nach einem der vorhergehenden Ansprüche,
**gekennzeichnet durch** die Verfahrensschritte:
Anordnen von flexiblen Thermomatten (1) auf zu enteisenden Flächen eines Flugzeugs (9);
Elektrisches Verbinden der Thermomatten (1) mit einem Steuerungssystem (21);
Abtauen der zu enteisenden Flächen unter eigenständiger Regelung einer Abtauleistung der Thermomatten (1) anhand von Umgebungslufttemperatur, Temperatur der Abtaufläche, sowie Heiztemperatur;
Entfernen der Thermomatten von den enteisten Flächen des Flugzeugs (9).

14. Verfahren nach Anspruch 13,
**dadurch gekennzeichnet,**
**dass** die Thermomatten (1) zum Schutz vor einem Wiedervereisen nach dem Abtauvorgang zumindest bei Schneeschauer oder Eisregen für eine beliebige Zeitspanne auf den abgetauten Flächen verbleiben.
